# EUROPÄISCHE PATENTSCHRIFT

(11) **EP 1 705 073 B1**
(45) Veröffentlichungstag und Bekanntmachung des Hinweises auf die Patenterteilung: **19.11.2008**
(21) Anmeldenummer: 06004183.7
(22) Anmeldetag: 02.03.2006
(51) Int. Cl.: B60R 21/13

(54) **Überrollschutzsystem**
Roll-over protection system
Système d'arceau de sécurité

(30) Priorität: 23.03.2005 DE 102005013376
(43) Veröffentlichungstag der Anmeldung: 27.09.2006
(73) Patentinhaber: Bayerische MotorenWerke Aktiengesellschaft, 80809 München (DE)
(72) Erfinder: Eltrop, Raphael, 80805 München (DE)

(56) Entgegenhaltungen:
- EP-A- 1 134 129
- DE-C1- 10 010 765

## Beschreibung

Die Erfindung betrifft ein Überrollschutzsystem nach dem Oberbegriff des Anspruchs 1.

Ein derartiges Überrollschutzsystem ist beispielsweise aus der EP 1182 098 A2 bekannt. Hierbei sind zur Verlagerung des Überrollbügels aus seiner abgesenkten Ausgangsposition in die ausgefahrene Wirkstellung im Inneren des Überrollbügels Antriebsdruckfedern vorgesehen, die von Federführungsbolzen geführt werden. Zwischen den Schenkeln des Überrollbügels und den Antriebsdruckfedern kann es im Fahrbetrieb zu Geräuschen kommen, da der Abstand zwischen den Innenseiten der Schenkeln des Überrollbügels und den Antriebsdruckfedern relativ klein ist. Daher sind am unteren Endabschnitt der Federführungsbolzen Zentrierarme vorgesehen, die einen gleichmäßigen Abstand der Antriebsdruckfedern zu den sie umgebenden Schenkelrohren des Überrollbügels gewährleisten.

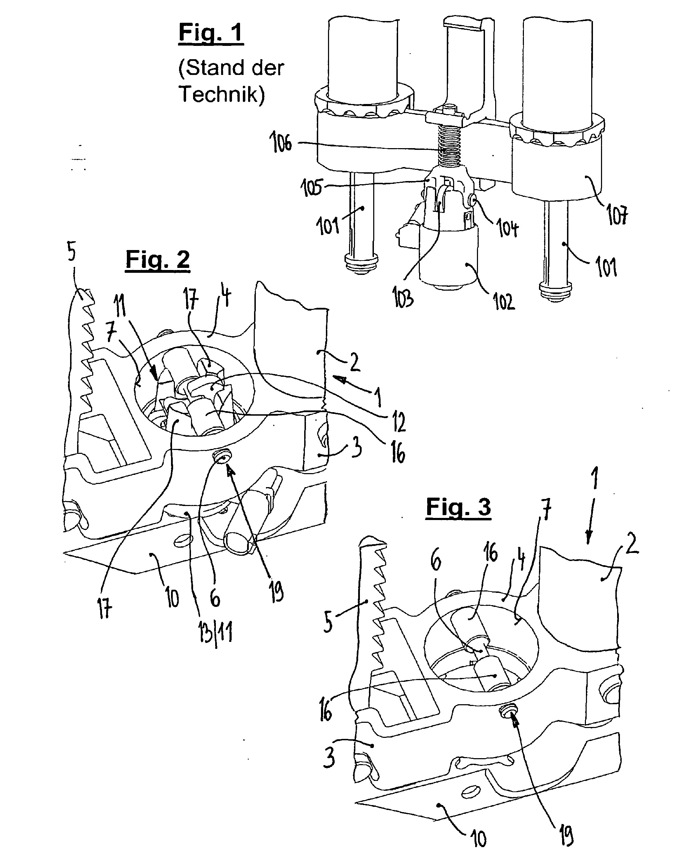

In Fig. 1 ist des weiteren eine aus den Fahrzeugen der Anmelderin der 6er-Cabrio-Baureihe bekannte Anordnung dargestellt, mit einem Überrollbügel 100, der in seiner abgesenkten Ausgangsposition dargestellt ist. Die Federführungsbolzen sind mit 101 bezeichnet. Eine Auslöseeinrichtung 102 zur Freigabe des Überrollbügels 100 aus seiner Ausgangsposition weist eine verlagerbare Sperrklinke 103 auf. Die Sperrklinke 103 wirkt mit einem überrollbügelseitigen Verriegelungsbolzen 104 zusammen, der über eine Gabel 105 und ein Federelement 106 mit einer Traverse 107 des Überrollbügels 100 verbunden ist. Durch die Gabel 105 und das Federelement 106 wird ein Ausgleich von Bauteil- und Lagetoleranzen und damit eine spannungsfreie Verriegelung der Auslöseeinrichtung 102 erreicht.

Aufgabe der Erfindung ist es, die bekannten Überrollschutzsysteme weiterzubilden.

Diese Aufgabe wird durch ein Überrollschutzsystem mit den Merkmalen des Anspruchs 1 gelöst.

Kerngedanke der Erfindung ist es hierbei, die Auslöseeinrichtung so zu gestalten, dass sie unmittelbar als Zentriereinrichtung für den Überrollbügel in seiner abgesenkten Ausgangsposition wirkt. Hierdurch kann eine zusätzliche Zentriereinrichtung, wie aus der EP 1 182 098 A2 bekannt, entfallen. Außerdem wird hierdurch eine lagegenaue Positionierung zwischen Überrollbügel und Auslöseeinrichtung erreicht, so dass zusätzliche Maßnahmen (wie die Fig. 1 dargestellte Gabel 105 und das Federelement 106) für einen Toleranzausgleich entfallen können. Durch die Zentrierung des Überrollbügels über die Auslöseeinrichtung wird eine vereinfachte Bauweise des Überrollschutzsystems erreicht.

Vorteilhafte Ausgestaltungen der Erfindung sind Gegenstand von Unteransprüchen.

Mögliche Ausführungsbeispiele der Erfindung sind in der Zeichnung dargestellt und werden nachfolgend näher erläutert. Es zeigt:
- Fig. 1: ein Überrollschutzsystem in perspektivischer Darstellung, nach dem Stand der Technik,
- Fig. 2: ein perspektivisch dargestellter Ausschnitt eines erfindungsgemäßen Überrollschutzsystems, mit Darstellung einer Auslöseeinrichtung,
- Fig. 3: eine der Fig. 2 entsprechende Abbildung, ohne Darstellung der Auslöseeinrichtung,
- Fig.4: eine perspektivische Unteransicht auf das erfindungsgemäße Überrollschutzsystem, ohne Darstellung der Auslöseeinrichtung und der Tragstruktur, und
- Fig. 5: eine perspektivische Seitenansicht eines erfindungsgemäßen Überrollschutzsystems, mit einer Abdeckung im Bereich der Auslöseeinrichtung.

Ein in den Fig. 2 bis 5 dargestelltes erfindungsgemäßes Überrollschutzsystem für ein oben offenes Fahrzeug weist einen translatorisch verlagerbaren Überrollbügel 1 auf, dessen Schenkel 2 an den freien Endabschnitten über eine Traverse 3 miteinander verbunden sind. Die Traverse 3 weist eine kreiszylindrische Aufnahme 4 auf. Des weiteren ist an der Traverse 3 eine Zahnleiste 5 angeordnet.

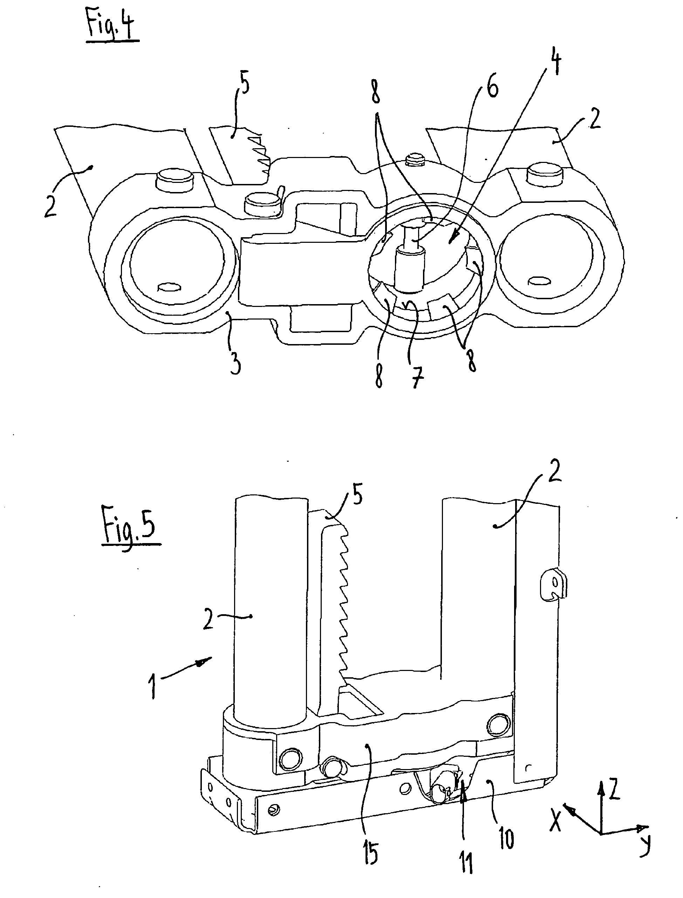

An einer Tragstruktur 10 des Überrollschutzsystems ist eine Auslöseeinrichtung 11 vorgesehen, die eine Sperrklinke 12 aufweist. Die Sperrklinke 12 wirkt mit einem Verriegelungsbolzen 6 zusammen, der sich beispielsweise in X-Richtung, parallel zur Fahrtrichtung, erstreckt. Das Koordinatensystem mit den Raumrichtungen X (Fahrzeuglängsachse), Y (Fahrzeugquerachse) und Z (Fahrzeughochachse) ist in Fig. 5 dargestellt. Zur Verdeutlichtung des Aufbaus des Überrollschutzsystems ist in den Fig. 3 und 4 die Auslöseeinrichtung 11 nicht dargestellt.

Die Auslöseeinrichtung 11 weist eine kreiszylindrische Mantelfläche 13 auf, die ihre entsprechende Gegenfläche in der etwa kreiszylindrischen Innenfläche 7 der Aufnahme 4 findet. In der abgesenkten Ausgangsposition des Überrollbügels 1, wie in den Fig. 2 bis 5 dargestellt, wird der Überrollbügel 1 über die in die Traverse 3 integrierte Aufnahme 4 durch die Mantelfläche 13 der Auslöseeinrichtung 11 zentriert. Durch diese Anordnung wird eine äußerst lagegenaue Positionierung des Überrollbügels 1 in seiner abgesenkten Ausgangsposition erreicht. Hierdurch erübrigen sich die aus dem Stand der Technik bekannten Maßnahmen zur Vermeidung von Verspannungen zwischen dem Verriegelungsbolzen 6 und der Sperrklinke 12. Damit wird gewährleistet, dass der Überrollbügel 1 bei einer Auslösung des Überrollschutzsystems ohne Zeitverzug ungehindert in Ausfahrrichtung Z freigegeben wird.

Zudem ist der Verriegelungsbolzen 6 in Langlöchern 19, die in Y-Richtung orientiert sind, an der Aufnahme 4 gelagert. Außerdem sind am Verriegelungsbolzen 6 Hülsen 16 vorgesehen. Diese wirken mit Nasen 17 zusammen, die von der Auslöseeinrichtung 11 nach oben abstehen. Hierdurch wird der Verriegelungsbolzen 6 in Bezug auf die Sperrklinke 12 zentriert. Somit dient die Lagerung des Verriegelungsbolzens 6 in Langlöchern 19 dem Toleranzausgleich und verhindert zusätzlich, dass sich Sperrklinke 12 und Verriegelungsbolzen 6 verspannen.

An der Innenfläche 7 der Aufnahme 4 sind mehrere zungenartige Federelemente 8 vorgesehen, die auf die Mantelfläche 13 der Auslöseeinrichtung 11 zuweisen und durch ihre radial nach innen gerichtete Vorspannkraft eine selbsttätige und gleichmäßige Zentrierung der Aufnahme 4 um die Auslöseeinrichtung 11 bewirken. Außerdem werden durch die Federelemente 8 Klappergeräusche zwischen der Aufnahme 4 und der Auslöseeinrichtung 11 vermieden.

Die Federelemente 8 können in Anzahl und Ausführung von der dargestellten Ausführungsform abweichen. Abweichend von der zeichnerischen Darstellung können die Federelemente in gleichwirkender Weise auch an der Mantelfläche 13 der Auslöseeinrichtung 11 vorgesehen sein, anstelle der Anordnung an der Innenfläche 7 der Aufnahme 4.

Durch die Zentrierung des Überrollbügels 1 direkt über die Auslöseeinrichtung 11 wird eine verbesserte Genauigkeit der Position der miteinander zusammenwirkenden Bauteile erreicht. Außerdem ergibt sich eine Vereinfachung der Bauweise und somit eine Einsparung von Bauteilen, mit Vorteilen hinsichtlich der Kosten und des Gewichtes.

Selbstverständlich kann die Zentrierung des Überrollbügels 1 durch die Auslöseeinrichtung 11 auch in anderer Weise erfolgen als in den Fig. 2 bis 5 beispielhaft dargestellt. Jegliche Art von Innenfläche, die am Überrollbügel 1 selbst oder an einem mit dem Überrollbügel 1 angeordneten Bauteil vorgesehen ist, kann in entsprechender Weise mit zumindest einem Teil der Mantelfläche der Auslöseeinrichtung 11 zusammenwirken. Die korrespondierenden Flächen können dabei selbstverständlich auch eine von der kreiszylindrischen Form abweichende Gestaltung aufweisen.

Wie in Fig. 5 dargestellt, ist es bei dem erfindungsgemäßen Überrollschutzsystem in besonders einfacher Weise möglich, eine Abdeckung 15 vorzusehen, die an der Oberseite der Traverse 3 angeordnet ist und den Bereich oberhalb der Aufnahme 4 und damit oberhalb der Auslöseeinrichtung 11 abdeckt. Durch die Abdeckung 15 wird in einfacher Weise eine Verschmutzung der Auslöseeinrichtung 11 oder das Eindringen von Kleinteilen in die Auslöseeinrichtung 11 vermieden. Hierdurch wird die Funktionssicherheit der Auslöseeinrichtung 11 erhöht.

## Patentansprüche

1. Überrollschutzsystem für ein oben offenes Fahrzeug, mit
- wenigstens einem, aus einer abgesenkten Ausgangsposition in eine ausgefahrene Wirkstellung verlagerbaren Überrollbügel,
- einer Einrichtung zur Zentrierung des Überrollbügels in seiner Ausgangsposition und
- einer Auslöseeinrichtung zur Freigabe des Überrollbügels aus seiner Ausgangsposition,
**dadurch gekennzeichnet, dass** die Auslöseeinrichtung (11) so ausgebildet ist, dass sie unmittelbar als Einrichtung (4, 8, 13) zur Zentrierung des Überrollbügels (1) in seiner abgesenkten Ausgangsposition wirkt, wodurch eine zusätzliche Zentriereinrichtung entfallen kann.

2. Überrollschutzsystem nach Anspruch 1,
**dadurch gekennzeichnet, dass** die Auslöseeinrichtung (11) so gestaltet und angeordnet ist, dass in der Ausgangsposition des Überrollbügels (1) wenigstens ein Teil der Mantelfläche (13) der Auslöseeinrichtung (11) mit einer korrespondierenden Innenfläche des Überrollbügels (1) oder eines mit dem Überrollbügel (1) verbundenen Bauteils (3, 4) zusammenwirkt.

3. Überrollschutzsystem nach Anspruch 1 oder 2, mit einem etwa U-förmigen Überrollbügel,
**dadurch gekennzeichnet, dass** die beiden Schenkel (2) des Überrollbügels (1) im Bereich ihrer freien Endabschnitte durch eine Traverse (3) verbunden sind, die eine Aufnahme (4) aufweist, deren Innenfläche in der Ausgangsposition des Überrollbügels (1) mit wenigstens einem Teil der Mantelfläche (13) der Auslöseeinrichtung (11) zusammenwirkt.

4. Überrollschutzsystem nach einem der vorgenannten Ansprüche,
**dadurch gekennzeichnet, dass** die Auslöseeinrichtung (11) eine etwa kreiszylindrische Mantelfläche (13) und die Aufnahme (4) eine etwa kreiszylindrische Innenfläche (7) aufweist.

5. Überrollschutzsystem nach einem der vorgenannten Ansprüche,
**dadurch gekennzeichnet, dass** an der Mantelfläche (13) der Auslöseeinrichtung und/oder an der Innenfläche (7) der Aufnahme (4) wenigstens ein Federelement (8) zur selbsttätigen Zentrierung des Überrollbügels (1) gegenüber der Auslöseeinrichtung (11) vorgesehen ist.

6. Überrollschutzsystem nach Anspruch 5,
**dadurch gekennzeichnet, dass** an der Innenfläche (7) der Aufnahme (4) eine Mehrzahl zungenartiger Federelemente (8) vorgesehen ist.

7. Überrollschutzsystem nach einem der vorgenannten Ansprüche,
**dadurch gekennzeichnet, dass** an der Aufnahme (4) ein quer zur Richtung (Z) der Ausfahrbewegung des Überrollbügels (1) verlaufender Verriegelungsbolzen (6) vorgesehen ist, in den eine Sperrklinke (12) der Auslöseeinrichtung (11) eingreift.

8. Überrollschutzsystem nach Anspruch 7,
**dadurch gekennzeichnet, dass** der Verriegelungsbolzen (6) in Langlöchern (19) an der Aufnahme (4) gehalten ist.

9. Überrollschutzsystem nach einem der vorgenannten Ansprüche,
**gekennzeichnet durch** eine Abdeckung (15) oberhalb der Auslöseeinrichtung (11), **durch** die das Eindringen von Fremdteilen in den Funktionsbereich der Auslöseeinrichtung (11) verhindert wird.

10. Überrollschutzsystem nach Anspruch 9,
**dadurch gekennzeichnet, dass** die Abdeckung (15) an der Traverse (3) angeordnet ist.

## Claims

1. A roll-over protective system for an open-top vehicle, comprising
- at least one roll bar movable from a lowered starting position into an extended operative position,
- a device for centring the roll bar in its starting position and
- a triggering device for releasing the roll bar from its starting position,
**characterised in that** the triggering device (11) is designed so that it operates directly as a device (4, 8, 13) for centring the roll bar (1) in its lowered starting position, thus avoiding the need for additional centring.

2. A system according to claim 1,
**characterised in that** the triggering device (11) is designed and disposed so that when the roll bar (1) is in the starting position at least a part of the surface (13) of the triggering device (11) co-operates with a corresponding inner surface of the roll bar (1) or with a component (3, 4) connected to the roll bar (1).

3. A system according to claim 1 or claim 2,
comprising an approximately U-shaped roll bar,
**characterised in that** the two limbs (2) of the roll bar (1) are connected at their free end portions by a cross-member (3) comprising a receiver (4), the inner surface of which co-operates with at least a part of the surface (13) of the triggering device (11) when the roll bar (1) is in the starting position.

4. A system according to any of the preceding claims,
**characterised in that** the triggering device (11) has an approximately circular cylindrical surface (13) and the receiver (4) has an approximately circular cylindrical inner surface (7).

5. A system according to any of the preceding claims,
**characterised in that** at least one spring element (8) for automatically centring the roll bar (1) relative to the triggering device (11) is provided on the surface (13) of the triggering device and/or on the inner surface (7) of the receiver (4).

6. A system according to claim 5,
**characterised in that** a number of tongue-like spring elements (8) are provided on the inner surface (7) of the receiver (4).

7. A system according to any of the preceding claims,
**characterised in that** a bolt (6) extending transversely of the direction (Z) of the extending motion of the roll bar (1) is provided on the receiver (4) and engages a catch (12) on the triggering device (11).

8. A system according to claim 7,
**characterised in that** the bolt (6) is held in slots (19) on the receiver (4).

9. A system according to any of the preceding claims,
**characterised in that** a cover (15) above the triggering device (11) prevents foreign bodies from entering the operative area of the triggering device (11).

10. A system according to claim 9,
**characterised in that** the cover (15) is disposed on the cross-member (3).

## Revendications

1. Système d'arceau de protection pour un véhicule dont le dessus est ouvert, et comprenant:
- au moins un arceau de protection déplacé d'une position de repos, abaissée dans une position active déployée,
- une installation pour centrer l'arceau de protection dans sa position de repos, et
- une installation de déclenchement pour libérer l'arceau de protection de sa position de repos,
**caractérisé en ce que**
l'installation de déclenchement (11) est réalisée pour fonctionner directement comme installation (4, 8, 13) de centrage de l'arceau de protection (1) dans sa position de repos, abaissée, pour supprimer une installation de centrage supplémentaire.

2. Système d'arceau de protection selon la revendication 1,
**caractérisé en ce que**
l'installation de déclenchement (11) est réalisée et disposée pour qu'en position de sortie de l'arceau de protection (1), au moins une partie de la surface-enveloppe (13) de l'installation de déclenchement (11) coopère avec une surface intérieure correspondante de l'arceau de protection (1) ou d'une pièce (3, 4) reliée à l'arceau de protection (1).

3. Système d'arceau de protection selon la revendication 1 ou 2, comportant un arceau de protection sensiblement en forme de U,
**caractérisé en ce que**
les deux branches (2) de l'arceau de protection (1) sont reliées par une traverse (3) au niveau de leurs segments d'extrémité libre, cette traverse comportant un logement (4) dont la surface intérieure coopère en position de repos de l'arceau de protection (1) avec au moins une partie de la surface-enveloppe (13) de l'installation de déclenchement (11).

4. Système d'arceau de protection selon l'une des revendications précédentes,
**caractérisé en ce que**
l'installation de déclenchement (11) a une surface-enveloppe (13) sensiblement cylindrique et le logement (4) a une surface intérieure (7) sensiblement cylindrique circulaire.

5. Système d'arceau de protection selon l'une des revendications précédentes,
**caractérisé en ce que**
la surface-enveloppe (13) de l'installation de déclenchement et/ou la surface intérieure (7) du logement (4) comporte au moins un élément de ressort (8) pour centrer automatiquement l'arceau de protection (1) par rapport à l'installation de déclenchement (11).

6. Système d'arceau de protection selon la revendication 8,
**caractérisé en ce que**
la surface intérieure (7) du logement (4) comporte plusieurs éléments de ressort (8) en forme de languettes.

7. Système d'arceau de protection selon l'une des revendications précédentes,
**caractérisé en ce que**
le logement (4) comporte un goujon de verrouillage (6) dirigé transversalement par rapport à la direction (z) du mouvement de déploiement de l'arceau de protection (1), et un verrou (12) de l'installation de déclenchement (11) pénètre dans le goujon de verrouillage.

8. Système d'arceau de protection selon la revendication 7,
**caractérisé en ce que**
le goujon de verrouillage (6) est tenu dans des trous oblongs (19) du support (4).

9. Système d'arceau de protection selon l'une des revendications précédentes,
**caractérisé par**
un capot (15) au-dessus de l'installation de déclenchement (11) évitant la pénétration de corps étrangers dans la zone fonctionnelle de l'installation de déclenchement (11).

10. Système d'arceau de protection selon la revendication 9,
**caractérisé en ce que**
la couverture (15) est prévue sur la traverse (13).
